# EUROPEAN PATENT SPECIFICATION

(11) **EP 0 408 155 B1**
(45) Date of publication and mention of the grant of the patent: **11.10.1995**
(21) Application number: 90201895.1
(22) Date of filing: 11.07.1990
(51) Int. Cl.: C08G 67/02, C08F 4/00

(54) **Catalyst compositions for the preparation of polymers of carbon monoxide with olefinically unsaturated compounds**
Katalytische Zusammensetzung zur Herstellung von Polymeren aus Kohlenmonoxyd und olefinischen ungesättigten Verbindungen
Composition catalytique pour la préparation de polymères de l'oxyde de carbone et de composés oléfiniques non saturés

(30) Priority: 14.07.1989 NL 8901829
(43) Date of publication of application: 16.01.1991
(73) Proprietor: SHELL INTERNATIONALE RESEARCH MAATSCHAPPIJ B.V., 2596 HR Den Haag (NL)
(72) Inventor: Wong, Pui Kwan, NL-2596 HR The Hague (NL); Keijsper, Johannes Jacobus, NL-1031 CM Amsterdam (NL); Van der Made, Alexander Willem, NL-1031 CM Amsterdam (NL)

(56) References cited:
- EP-A- 0 222 454

## Description

The invention relates to novel catalyst compositions which are suitable for use in the preparation of polymers of carbon monoxide with one or more olefinically unsaturated compounds.

The relevant polymers are linear polymers of carbon monoxide with one or more olefinically unsaturated compounds, in which polymers the units originating in carbon monoxide on the one hand, and the units originating in the applied olefinically unsaturated compounds on the other hand, occur in alternating order. It is known that these polymers can be prepared by contacting the monomers with a catalyst composition comprising a Group VIII metal and a bisphosphine of the general formula (R¹R²P)₂R³, wherein R¹ and R² are identical or different, optionally polarly substituted hydrocarbyl groups and R³ represents a bivalent organic group which connects the two phosphorus atoms and has such a structure that at least two carbon atoms are found between the two phosphorus atoms. Such a polymerization process is described in EP-A-0 222 454.

In the polymer preparation mentioned hereinbefore, both reaction rates and average molecular weights of the polymers obtained play an important role. On the one hand, it is desirable that in the polymer preparation the reaction rates achieved be as high as possible and on the other hand, as regards their possible application, the polymers will be more valuable as their molecular weights are higher. Both reaction rates and molecular weights can be influenced by the temperature applied during polymerization. Unfortunately, the effects of the temperature on reaction rates and on molecular weights are opposed to one another, in that at otherwise equal reaction conditions, an increase in reaction temperature leads to increased reaction rates but the polymers obtained have decreased average molecular weights. In actual practice this boils down to conducting the polymerization at such a temperature that the polymers obtained have average molecular weights which are sufficiently high for their intended uses, while the resulting reaction rates have to be accepted.

The Applicant has carried out research aimed at improving this situation. It has now been found that, unexpectedly, the performance of the afore-mentioned catalyst compositions can be improved considerably in terms of the relation between reaction rate and average molecular weight of the prepared polymers by the replacement of the bisphosphine by a tetrakisphosphine of the general formula (R¹R²P)₄R⁵, wherein R¹ and R² have the meanings given hereinbefore and R⁵ represents a tetravalent organic group which connects the four phosphorus atoms and which has such a structure that there are at least two carbon atoms between every two phosphorus atoms. Comparison of the performance of the original catalyst compositions containing a bisphosphine of the general formula (R¹R²P)₂R³ with the modified catalyst compositions containing a tetrakisphosphine of the general formula (R¹R²P)₄R⁵ shows that at a reaction rate which is the same for both compositions, the modified compositions afford polymers with higher average molecular weights, and alternatively that when both compositions are used for preparing polymers of the same average molecular weight, the modified compositions display a higher reaction rate.

The advantageous results achieved by the replacement of the bisphosphine component of the catalyst composition by a tetrakisphosphine are even more surprising in the light of the results which were obtained by replacement of the bisphosphine by a trisphosphine of the general formula (R¹R²P)₃R⁴, wherein R¹ and R² have the meanings given hereinbefore and R⁴ represents a trivalent organic group which connects the three phosphorus atoms and has such a structure that there are at least two carbon atoms between every two phosphorus atoms. Replacing the bisphosphine by such a trisphosphine resulted in a considerably poorer relation between reaction rates and average molecular weights of the polymers obtained than with the known bisphosphines.

The polymers of the invention may be prepared as a suspension in a diluent in which the polymers are insoluble or virtually insoluble. When the preparation of the polymers is carried out in a batch-wise mode part of the formed polymer is deposited as a crust on the reactor wall and internals. This phenomenon of reactor fouling is very disadvantageous, e.g. because it hampers heat transfer. It has now been found that, quite unexpectedly, when the catalyst composition comprises a tetrakisphosphine of the general formula (R¹R²P)₄R⁵ instead of a bisphosphine of the general formula (R¹R²P)₂R³ the proportion of the polymer which is formed as a crust is reduced. Thus, application of such a tetrakisphosphine as a catalyst component has the additional advantage of decreasing reactor fouling.

The present improvement in catalyst performance offers the prospect of preparing polymers with very high average molecular weights at high reaction rates. This is of particular importance for the preparation of terpolymers of carbon monoxide with ethene and another olefinically unsaturated hydrocarbon, where thus far it has been extremely difficult to prepare products with very high average molecular weights at an acceptable reaction rate. When using a catalyst composition which contains a bisphosphine of the general formula (R¹R²P)₂R³, an increase in the average molecular weights of the polymers can be achieved, as was stated hereinbefore, by carrying out the polymerization at a lower temperature. According as lower reaction temperatures are used, the reaction rate will decrease. The average molecular weights that can be realized in this manner are tied to certain maximum values, since below certain reaction temperatures the reaction rates become unacceptably low. When the polymerization is carried out by using a catalyst composition which contains a tetrakisphosphine of the general formula (R¹R²P)₄R⁵, terpolymers having average molecular weights which are considerably higher than the maximum values can be prepared at an acceptable reaction rate.

Catalyst compositions comprising a Group VIII metal and a tetrakisphosphine of the general formula (R¹R²P)₄R⁵ are novel.

The present patent application therefore relates to novel catalyst compositions which comprise a Group VIII metal and a tetrakisphosphine of the general formula (R¹R²P)₄R⁵, Wherein R¹ and R² represent identical or different optionally polarly substituted hydrocarbyl groups and R¹ represents a tetravalent organic group which connects the four phosphorus atoms and has such a structure that there are at least two carbon atoms between every two phosphorus atoms.

The patent application further relates to the use of these catalyst compositions in the preparation of polymers by contacting a mixture of carbon monoxide and one or more olefinically unsaturated compounds with a catalyst composition of the invention. The present application also relates to certain tetrakisphosphines as novel compounds.

In the present patent application, Group VIII metals should be taken to be the noble metals ruthenium, rhodium, palladium, osmium, iridium and platinum, and the iron group metals iron, cobalt and nickel.

In the catalyst compositions of the invention, the preferred Group VIII metal is chosen from palladium, nickel and cobalt. Special preference is given to palladium as the Group VIII metal. By preference, the Group VIII metal is taken up in the catalyst composition in the form of a salt of a carboxylic acid, in particular in the form of an acetate. In addition to a Group VIII metal and a tetrakisphosphine, the catalyst compositions of the invention preferably include an anion of an acid with a pKa of less than 6 (determined in aqueous solution at 18°C), in particular an anion of an acid with a pKa of less than 4, and especially an anion of an acid with a pKa of less than 2. Examples of acids with a pKa of less than 2 are mineral acids, such as sulphuric acid and perchloric acid, sulphonic acids, such as methanesulphonic acid, trifluoromethanesulphonic acid and para-toluenesulphonic acid, and halocarboxylic acids, such as trichloroacetic acid, difluoroacetic acid and trifluoroacetic acid. Preference is given to a sulphonic acid, such as para-toluenesulphonic acid or a halocarboxylic acid, such as trifluoroacetic acid. The anion of acid with a pKa of less than 6 may be taken up in the catalyst composition in the form of an acid and/or in the form of a salt, such as a copper salt or a nickel salt. Preferably, the anion is present in the catalyst compositions in a quantity of 1-1000 and in particular of 2-100 mol per mol of Group VIII metal. The anions of acids with a pKa of less than 6 may be present in the catalyst compositions of the invention because they were added as a separate component, or because, for instance, palladium trifluoroacetate or palladium para-tosylate was used as the palladium compound.

In addition to a Group VIII metal, a tetrakisphosphine and, optionally, an anion of an acid with a pKa of less than 6, the catalyst compositions of the invention preferably also include an organic oxidant. Examples of suitable organic oxidants are 1,2- and 1,4-quinones, aliphatic nitrites, such as butyl nitrite and aromatic nitro compounds, such as nitrobenzene and 2,4-dinitrotoluene. Preference is given to 1,4-benzoquinone and 1,4-naphthoquinone. The quantity of organic oxidant used preferably amounts to 1-10000 and in particular 10-5000 mol per mol of Group VIII metal.

In the catalyst compositions of the invention, the tetrakisphosphine is preferably present in a quantity of 0.25-25 and in particular 0.5-10 mol per mol of group VIII metal.

Examples of tetrakisphosphines which are eligible for use in the catalyst compositions of the invention are
a) 1,2,3,4-tetrakis(diphenylphosphino)butadiene-1,3, which may be prepared by reacting 1,2-bis(diphenylphosphino)acetylene with diphenyl phosphine,
b) N,N,N′,N′-tetrakis(diphenylphosphinomethyl)ethylenediamine, which may be prepared by reacting ethylene diamine with formaldehyde and diphenyl phosphine,
c) N,N,N′,N′-tetrakis(diphenylphosphinomethyl)hydrazine, which may be prepared by reacting hydrazine hydrate with diphenyl hydroxymethyl phosphine,
d) tetrakis(diphenylphosphinomethyl)methane, which may be prepared from the tetraalcohol pentaerythritol, which is halogenated, after which the tetrahalogen compound thus obtained is reacted with sodium diphenyl phosphide, and
e) a tetrakisphosphine which may be prepared by brominating durene with N-bromosuccinimide, followed by the reaction of the tetrabromo compound thus obtained with an alkali metal diaryl phosphide.

Suitably the catalyst compositions include a tetrakisphosphine of the general formula

(R¹R²P-CH₂-)₂CH-Q-CH(-CH₂-PR¹R²)₂, (I)

wherein Q is a chemical bond or a bivalent organic bridging group comprising up to 18 carbon atoms.
Examples of tetrakisphosphines of the general formula (I) are
aa) a tetrakisphosphine which may be prepared by reacting a 2-hydroxy-1,3-bis(diarylphosphino)propane with terephthaloyl dichloride,
bb) a tetrakisphosphine which may be prepared by reacting a 2-hydroxy-1,3-bis(diarylphosphino)propane with bis(4-isocyanatophenyl)methane,
cc) a tetrakisphosphine which may be prepared by reacting a 2-hydroxy-1,3-bis(diarylphosphino)propane with the diglycidyl ether of diphenylol propane, and
dd) a tetrakisphosphine which may be prepared by reacting 1,4-bis(2-chloromethyl-3-chloropropyl)benzene with an alkali metal diaryl phosphide.

In a preferred embodiment of the invention the catalyst compositions include a tetrakisphosphine of the general formula (I) wherein Q is a group of the general formula -(CH₂)ₙ-, in which n is an integer ranging from 0 to 14 and in particular such tetrakisphosphines in which n is smaller than 10. Tetrakisphosphines of the general formula

(R¹R²P-CH₂-)₂CH-(CH₂)ₙ-CH(-CH₂-PR¹R²)₂

are novel compounds. The present patent application also relates to these novel tetrakisphosphines. The preparation of these novel tetrakisphosphines can be performed starting from the corresponding tetraalcohols, in the same way as indicated hereinbefore under d) for pentaerythritol. Instead of replacing the hydroxyl groups of the tetraalcohol by halogen atoms, one may, if desired, replace the hydroxyl groups by tosylate groups by reacting the tetraalcohol in pyridine with para-tosylchloride and then reacting the tetratosyl compound thus obtained with an alkali metal diaryl phosphide as described in US-A-4,356,324, where diphosphines are prepared in an analogous way, starting from dialcohols. The tetraalcohols needed as starting material for the preparation of the novel tetrakisphosphines, such as 2,3-bis(hydroxymethyl)butane-1,4-diol, 2,4-bis(hydroxymethyl)pentane-1,5-diol and 2,5-bis(hydroxymethyl)hexane-1,6-diol, are known in the literature. They may be prepared from the corresponding tetraethyl esters through reduction with lithium aluminium hydride, as described in Am. Soc. 78 (1956) 2287, 2289; Collection Czechoslov. Chem. Comm. 38 (1973) 1101-1103; J. Medicinal Chem. 15, (1972) 448-449.

In another preferred embodiment of the invention the catalyst compositions include a tetrakisphosphine of the general formula (I) wherein Q is a group of the general formula -O-Q¹-O-, in which Q¹ is a bivalent hydrocarbyl bridging group comprising 2 to 18 carbon atoms. For example, Q¹ may be a linear or branched alkylene group. In particular, Q¹ is a bridging group of the formula -CH₂-Q²-CH₂- wherein Q² is an arylene, especially a phenylene, group which is optionally substituted with 1 to 4 methyl groups.

Tetrakisphosphines of the general formula

(R¹R²P-CH₂-)₂CH-O-Q¹-O-CH(-CH₂-PR¹R²)₂ (II)

wherein R¹, R² and Q¹ have the meanings given hereinbefore are novel compounds. The present patent application relates also to these novel tetrakisphosphines. They can be prepared, for example, by reacting a dihalide of the general formula X-Q¹-X in which X is a halogen atom with an epihalohydrin to form a tetrahalide of the general formula

(X-CH₂-)₂CH-O-Q¹-O-CH(-CH₂-X)₂. (III)

When Q¹ represents a bridging group of the formula -CH₂-Q²-CH₂- this reaction is suitably carried out in the presence of a mercury halogenide according to methods described in Ber. 90 (1957) 1424. The dihalides of the formula X-Q¹-X are known compounds. The tetrahalides thus prepared can be reacted with an alkali metal diaryl phosphide as described in EP-A-0298540 to form the tetrakisphosphines of the general formula (II). Tetrahalides of the general formula (III) are novel compounds. Particularly suitable tetrahalides of the general formula (III) are the following: 1,4-bis[(1,3-dibromo-2-propoxy)methyl]benzene, 1,3-bis[(1,3-dibromo-2-propoxy)methyl]benzene, and 1,3-bis[(1,3-dibromo-2-propoxy)methyl]-2,4,6-trimethylbenzene.

The optionally polarly substituted aliphatic or aromatic hydrocarbyl groups R¹ and R² present in the tetrakisphosphines may be identical or different. In the catalyst compositions of the invention, it is preferred to employ tetrakisphosphines in which the groups R¹ and R² are identical optionally polarly substituted aromatic hydrocarbyl groups. Further, it is preferred to employ tetrakisphosphines in which the groups R¹ and R² are phenyl groups optionally containing an alkoxy group ortho in respect to the phosphorus atom to which they are bound, and more in particular a methoxy group. Very favourable results may be obtained when catalyst compositions are applied which include a tetrakisphosphine selected from 1,8-bis[bis(2-methoxyphenyl)phosphino]-2,7-bis[bis(2-methoxyphenyl)phosphinomethyl]octane, 1,5-bis[bis(2-methoxyphenyl)phosphino]-2,4-bis[bis(2-methoxyphenyl)phosphinomethyl]pentane, 1,4-bis[(1,3-bis(bis(2-methoxyphenyl)phosphino)-2-propoxy)methyl]benzene, 1,3-bis[(1,3-bis(bis(2 methoxyphenyl)phosphino)-2-propoxy)methyl]benzene and 1,3-bis[(1,3-bis(bis(2-methoxyphenyl)phosphino)-2-propoxy)methyl]-2,4,6-trimethylbenzene.

Polymerization by using the catalyst compositions of the invention is preferably carried out by contacting the monomers with a solution of the catalyst composition in a diluent in which the polymers are insoluble or virtually insoluble. Very suitable diluents are lower alcohols such as methanol. The polymerization may also be carried out in the gaseous phase, if desired.

Eligible olefinically unsaturated compounds which can be polymerized with carbon monoxide by using the catalyst compositions of the invention are compounds which consist exclusively of carbon and hydrogen as well as compounds which, in addition to carbon and hydrogen, contain one or more hetero atoms. The catalyst compositions of the invention are preferably applied for preparing polymers of carbon monoxide with one or more olefinically unsaturated hydrocarbons. Examples of suitable hydrocarbon monomers are ethene and α-olefins, such as propene, butene-1, hexene-1 and octene-1. The catalyst compositions of the invention are in particular very suitable to be applied in the preparation of copolymers of carbon monoxide with ethene and in the preparation of terpolymers of carbon monoxide with ethene and another α-olefin, in particular propene.

The quantity of catalyst composition employed in the preparation of the polymers may vary within wide limits. The quantity of catalyst composition used per mol of the olefinically unsaturated compound to be polymerized preferably contains 10⁻⁷-10⁻³ and in particular 10⁻⁶-10⁻⁴ mol of Group VIII metal.

The preparation of the polymers is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide in the mixture to be polymerized is preferably 10:1-1:10 and in particular 5:1-1:5.

As a rule, the polymers prepared according to the invention will exhibit higher intrinsic viscosities according as their molecular weights are higher. For the determination of the intrinsic viscosity four solutions are prepared by dissolving the polymer in four different concentrations in m-cresol. The viscosity of each of these solutions is measured in a viscometer at 60°C relative to m-cresol at 60°C. If Tₒ represents the flow time of m-cresol and Tₚ the flow time of the polymer solution, the relative viscosity (ηᵣₑₗ) is obtained from 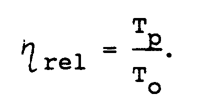
From ηᵣₑₗ the inherent viscosity (ηᵢₙₕ) can be calculated according to the formula 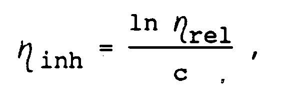
wherein c represents the concentration of the polymer in grams per 100 ml of solution. By plotting graphically the ηᵢₙₕ found for each of the four polymer solutions against the corresponding concentration (c) and then by extrapolating to c=0, the intrinsic viscosity [η] in dl/g is found. Instead of "intrinsic viscosity", this patent application will henceforth use the term recommended by the International Union of Pure and Applied Chemistry, viz. "Limiting Viscosity Number" (LVN).

The invention will now be illustrated by the following examples.

### Example 1 (comparative)

A carbon monoxide/ethene copolymer was prepared as follows. A mechanically stirred autoclave with a volume of 300 ml was charged with 200 ml of methanol. After the contents of the autoclave were brought to 85°C, a 1:1 carbon monoxide/ethene mixture was introduced until a pressure of 55 bar was reached. Subsequently, a catalyst solution was introduced into the autoclave which comprised
6 ml methanol,
0.01 mmol palladium acetate,
0.02 mmol trifluoroacetic acid, and
0.01 mmol 1,3-bis(diphenylphosphino)propane.

The pressure inside the autoclave was kept at 55 bar by pressing in a 1:1 carbon monoxide/ethene mixture. After 4.7 hours, polymerization was terminated by cooling the reaction mixture to room temperature and releasing the pressure. The copolymer was filtered off, washed with methanol and dried at 70°C.

The yield was 30 g of copolymer with an LVN(60) of 0.8 dl/g. The polymerization rate was 6.0 kg copolymer/g palladium·hour.

### Example 2 (comparative)

A carbon monoxide/ethene copolymer was prepared substantially in the same way as the copolymer of Example 1, except for the following differences
a) the catalyst solution comprised 0.01 mmol of 1,3-bis(diphenylphosphino)-2-methyl-2-diphenylphosphinomethylpropane instead of 1,3-bis(diphenylphosphino)propane, and
b) the reaction time was 6.6 hours instead of 4.7 hours.

The yield was 26 g of copolymer with an LVN(60) of 0.4 dl/g. The polymerization rate was 3.7 kg copolymer/g palladium·hour.

### Example 3 (comparative)

A carbon monoxide/ethene/propene terpolymer was prepared as follows. A mechanically stirred autoclave with a volume of 300 ml was charged with 200 ml of methanol and 24 ml of liquid propene. After the contents of the autoclave were brought to 87°C, a 1:1 carbon monoxide/ethene mixture was blown in until a pressure of 56 bar was reached. Subsequently, a catalyst solution was introduced into the autoclave which comprised
6 ml methanol,
0.01 mmol palladium acetate,
0.2 mmol trifluoroacetic acid, and
0.01 mmol 1,3-bis(diphenylphosphino)propane.

The pressure was kept at 56 bar by pressing in a 1:1 carbon monoxide/ethene mixture. After 3.7 hours, polymerization was terminated by cooling the reaction mixture to room temperature and releasing the pressure. The terpolymer was filtered off, washed with methanol and dried at 70°C.

The yield was 21 g of terpolymer with an LVN(60) of 0.4 dl/g. The polymerization rate was 5.3 kg terpolymer/g palladium·hour.

### Example 4 (comparative)

A carbon monoxide/ethene/propene terpolymer was prepared substantially in the same way as the terpolymer of Example 3, except for the following differences
a) the catalyst solution comprised 0.01 mmol of 1,3-bis(diphenylphosphino)-2-methyl-2-diphenylphosphinomethylpropane instead of 1,3-bis(diphenylphosphino)propane, and
b) the reaction time was 6.1 hours instead of 3.7 hours.

The yield was 18 g of terpolymer with an LVN(60) of 0.4 dl/g. The polymerization rate was 2.8 kg terpolymer/g palladium·hour.

### Example 5 (comparative)

A carbon monoxide/ethene copolymer was prepared as follows. A mechanically stirred autoclave with a volume of 300 ml was charged with 200 ml of methanol. After the contents of the autoclave were brought to 90°C, a 1:1 carbon monoxide/ethene mixture was blown in until a pressure of 55 bar was reached. Subsequently, a catalyst solution was introduced into the autoclave which comprised
4.5 ml methanol,
1.5 ml toluene,
0.01 mmol palladium acetate,
0.2 mmol trifluoroacetic acid, and
0.012 mmol 1,3-bis[bis(2-methoxyphenyl)phosphino]propane.

The pressure inside the autoclave was kept up by pressing in a 1:1 carbon monoxide/ethene mixture. After 2.58 hours, polymerization was terminated by cooling the reaction mixture to room temperature and releasing the pressure.

The yield was 6.22 g of copolymer with an LVN(60) of 1.7 dl/g. The polymerization rate was 2.3 kg copolymer/g palladium·hour.

### Example 6

A carbon monoxide/ethene copolymer was prepared substantially in the same way as the copolymer of Example 5, except for the following differences
a) the catalyst solution used comprised
   6 ml acetone,
   0.01 mmol palladium acetate,
   0.2 mmol trifluoroacetic acid,
   0.005 mmol 1,8-bis[bis(2-methoxyphenyl)phosphino]-2,7-bis[bis(2-methoxyphenyl)phosphinomethyl]octane, and
b) the reaction time was 1.17 hours instead of 2.58 hours.

The yield was 8.0 g of copolymer with an LVN(60) of 1.8 dl/g. The polymerization rate was 9.5 kg copolymer/g palladium·hour.

### Example 7 (comparative)

A carbon monoxide/ethene/propene terpolymer was prepared as follows. A mechanically stirred autoclave with a volume of 300 ml was charged with 178 ml of methanol and 24 g of propene. After the contents of the autoclave were brought to 80°C, a 1:1 carbon monoxide/ethene mixture was blown in until a pressure of 55 bar was reached. Subsequently, a catalyst solution was introduced into the autoclave which comprised
4.5 ml methanol,
1.5 ml toluene,
0.01 mmol palladium acetate,
0.2 mmol trifluoroacetic acid, and
0.011 mmol 1,3-bis[bis(2-methoxyphenyl)phosphino]propane.

The pressure inside the autoclave was kept up by pressing in a 1:1 carbon monoxide/ethene mixture. After 2.45 hours, polymerization was terminated by cooling the reaction mixture to room temperature and releasing the pressure.

The yield was 8.9 g of terpolymer with an LVN(60) of 2.1 dl/g. The polymerization rate was 3.4 kg terpolymer/g palladium·hour.

### Example 8

A carbon monoxide/ethene/propene terpolymer was prepared substantially in the same way as the terpolymer of Example 7; except for the following differences
a) the catalyst solution used comprised
   4.5 ml methanol,
   1.5 ml toluene,
   0.009 mmol palladium acetate,
   0.2 mmol trifluoroacetic acid, and
   0.005 mmol 1,8-bis[bis(2-methoxyphenyl)phosphino]-2,7-bis[bis(2-methoxyphenyl)phosphinomethyl]octane, and
b) the reaction time was 1.92 hours instead of 2.45 hours.

The yield was 20.3 g of terpolymer with an LVN(60) of 2.6 dl/g. The polymerization rate was 11.1 kg terpolymer/g palladium·hour.

### Example 9 (comparative)

A carbon monoxide/ethene copolymer was prepared as follows. A mechanically stirred autoclave with a volume of 3.8 l was charged with 1.5 l of methanol. After the contents of the autoclave were brought to 80°C, so much ethene and carbon monoxide was introduced that the ethene partial pressure was 7.6 bar and the carbon monoxide partial pressure was 11.4 bar. Subsequently, a catalyst solution was introduced into the autoclave which comprised
6 ml acetone,
0.02 mmol palladium acetate,
0.4 mmol trifluoroacetic acid, and
0.024 mmol 1,3-bis[bis(2-methoxyphenyl)phosphino]propane.

The pressure inside the autoclave was kept up by pressing in a 1:1 carbon monoxide/ethene mixture. After 19 hours, polymerization was terminated by cooling the reaction mixture to room temperature and releasing the pressure. The copolymer was filtered off, washed with methanol and dried at 70°C.

The yield was 97 g of copolymer with an LVN(60) of 2.1 dl/g. The polymerization rate was 2.4 kg copolymer/g palladium·hour.

### Example 10

A carbon monoxide/ethene copolymer was prepared substantially in the same way as the copolymer of Example 9, except for the following differences
a) the catalyst solution comprised 0.012 mmol of 1,8-bis[bis(2-methoxyphenyl)phosphino]-2,7-bis[bis(2-methoxyphenyl)phosphinomethyl]octane instead of 1,3-bis[bis(2-methoxyphenyl)phosphino]propane, and
b) the reaction time was 17 hours instead of 19 hours.

The yield was 90 g of copolymer with an LVN(60) of 2.7 dl/g. The polymerization rate was 2.5 kg copolymer/g palladium·hour.

### Example 11 (comparative)

A carbon monoxide/ethene/propene terpolymer was prepared substantially in the same way as the carbon monoxide/ethene copolymer of Example 9, except for the following differences
a) such quantities of ethene, propene and carbon monoxide were blown into the autoclave that the ethene partial pressure was 8.5 bar, the propene partial pressure was 7 bar and the carbon monoxide partial pressure 23.5 bar.
b) the reaction temperature was 75°C instead of 80°C, and
c) the reaction time was 23 hours instead of 19 hours.

The yield was 170 g of terpolymer with an LVN(60) of 1.9 dl/g. The polymerization rate was 3.5 kg terpolymer/g palladium·hour.

### Example 12

A carbon monoxide/ethene/propene terpolymer was prepared substantially in the same way as in Example 11, except for the following differences
a) the catalyst solution comprised 0.012 mmol of 1,8-bis[bis(2-methoxyphenyl)phosphino]-2,7-bis[bis(2-methoxyphenyl)phosphinomethyl]octane instead of 1,3-bis[bis(2-methoxyphenyl)phosphino]propane, and
b) the reaction time was 4.5 hours instead of 23 hours.

The yield was 40 g of terpolymer with an LVN(60) of 3.1 dl/g. The polymerization rate was 4.2 kg terpolymer/g palladium·hour.

### Example 13 (comparative)

A carbon monoxide/ethene/propene terpolymer was prepared as follows. A mechanically stirred autoclave with a volume of 300 ml was charged with a catalyst solution containing
135 ml of methanol,
4 ml of acetone,
0.009 mmol of palladium acetate,
0.19 mmol of trifluoroacetic acid, and
0.01 mmol of 1,3-bis[bis(2-methoxyphenyl)phosphino]propane.
The air present in the autoclave was expelled by introducing into the autoclave carbon monoxide until a pressure of 50 bar was reached and subsequently releasing the pressure. Introducing carbon monoxide and releasing the pressure was repeated twice. After the contents of the autoclave was brought to 82 °C, such quantities of carbon monoxide, propene and ethene were introduced successively that the partial pressures of carbon monoxide, propene and ethene amounted to 25, 10 and 15 bar, respectively. During the polymerization the pressure was kept constant at 52 bar by introducing a 1:1 carbon monoxide/ethene mixture. After 8.2 hours the polymerization was terminated by cooling the reaction mixture to room temperature and releasing the pressure. The terpolymer was filtered off, washed with methanol and dried at 70 °C.

The yield was 24.7 g of terpolymer with an LVN(60) of 2.0 dl/g. The polymerization rate was 3.1 kg terpolymer/g palladium/hour.

### Example 14

A carbon monoxide/ethene/propene terpolymer was prepared substantially in the same way as the terpolymer of Example 13, except for the following differences
a) the catalyst solution comprised 0.005 mmol of 1,4-bis[(1,3-bis(bis(2-methoxyphenyl)phosphino)-2-propoxy)methyl]benzene instead of 1,3-bis[bis(2-methoxyphenyl)phosphino]propane,
b) the reaction temperature was 80 °C instead of 82 °C, and
c) the reaction time was 2.7 hours instead of 8.2 hours.

The yield was 18.9 g of terpolymer with an LVN(60) of 3.0 dl/g. The polymerization rate was 7.3 kg terpolymer/g palladium·hour.

### Example 15

A carbon monoxide/ethene/propene terpolymer was prepared substantially in the same way as the terpolymer of Example 13, except for the following differences
a) the catalyst solution comprised 0.005 mmol of 1,3-bis[(1,3-bis(bis(2-methoxyphenyl)phosphino)-2-propoxy)methyl]benzene instead of 1,3-bis[bis(2-methoxyphenyl)phosphino]propane,
b) the reaction temperature was 80 °C instead of 82 °C, and
c) the reaction time was 1.5 hours instead of 8.2 hours.

The yield was 8.3 g of terpolymer with an LVN(60) of 2.0 dl/g. The polymerization rate was 5.8 kg terpolymer/g palladium·hour.

### Example 16

A carbon monoxide/ethene/propene terpolymer was prepared substantially in the same way as the terpolymer of Example 13, except for the following differences
a) the catalyst solution comprised 0.005 mmol of 1,5-bis[bis(2-methoxyphenyl)phosphino]-2,4-bis[bis(2-methoxyphenyl)phosphinomethyl]pentane, instead of 1,3-bis[bis(2-methoxyphenyl)phosphino]propane,
b) the reaction temperature was 78 °C instead of 82 °C, and
c) the reaction time was 3.7 hours instead of 8.2 hours.

The yield was 14.3 g of terpolymer with an LVN(60) of 2.0 dl/g. The polymerization rate was 4.1 kg terpolymer/g palladium·hour.

Of Examples 1-16, Examples 6, 8, 10, 12 and 14-16 are examples in accordance with the invention. In these examples, catalyst compositions according to the invention comprising a tetrakisphosphine were employed. Examples 1-5, 7, 9, 11 and 13 fall outside the scope of the invention and have been included in the patent application for comparison. The catalyst compositions used in Examples 1, 3, 5, 7, 9, 11 and 13 comprised a bisphosphine. The catalyst compositions used in Examples 2 and 4 comprised a trisphosphine. With the aid of ¹³C-NMR analysis it was established that the carbon monoxide/ethene copolymers prepared by Examples 1, 2, 5, 6, 9 and 10 and the carbon monoxide/ethene/propene terpolymers prepared by Examples 3, 4, 7, 8 and 11-16 were made up of linear chains in which the units originating in carbon monoxide on the one hand, and the units originating in ethene or propene on the other hand, occurred in alternating order.

The adverse effect on their performance which the catalyst compositions suffer when a bisphosphine therein is replaced by a trisphosphine, is demonstrated by the comparison of the results of Examples 1 and 2 (lower reaction rate with lower average molecular weight) and by the comparison of the results of Examples 3 and 4 (lower reaction rate with the same average molecular weight).

The favourable effect on the performance of the catalyst compositions which is effected by replacing a bisphosphine by a tetrakisphosphine in accordance with the invention, is clearly demonstrated by the comparison of the results of Examples 5, 7, 9, 11 and 13 with those of Examples 6, 8, 10, 12 and 14-16, respectively. In these cases, higher molecular weights are observed together with higher reaction rates or higher reaction rates are observed together with unchanged molecular weights.

## Claims (Claims for the following Contracting State(s): AT, BE, CH, DE, DK, FR, GB, IT, LI, NL, SE)

1. Catalyst compositions comprising a Group VIII metal and a phosphine, characterized in that the phosphine is a tetrakisphosphine of the general formula (R¹R²P)₄R⁵, wherein R¹ and R² represent identical or different optionally polarly substituted hydrocarbyl groups and R⁵ represents a tetravalent organic group which connects the four phosphorus atoms and has such a structure that there are at least two carbon atoms between every two phosphorus atoms.

2. Catalyst compositions as claimed in claim 1, characterized in that they comprise palladium as the Group VIII metal.

3. Catalyst compositions as claimed in claim 1 or 2, characterized in that the Group VIII metal is incorporated therein in the form of a salt of a carboxylic acid, such as an acetate.

4. Catalyst compositions as claimed in any of claims 1-3, characterized in that in addition they include an anion of an acid with a pKa of less than 6, and, optionally an organic oxidant.

5. Catalyst compositions as claimed in claim 4, characterized in that they include an anion of an acid with a pKa of less than 4.

6. Catalyst compositions as claimed in claim 4 or 5, characterized in that they include the anion of an acid with a pKa of less than 6 in a quantity of 1-1000 mol per mol of Group VIII metal, and, optionally, they include the organic oxidant in a quantity of 1-10000 mol per mol of Group VIII metal.

7. Catalyst compositions as claimed in any of claims 1-6, characterized in that they include the tetrakisphosphine in a quantity of 0.25-25 mol per mol of Group VIII metal.

8. Catalyst compositions as claimed in any of claims 1 - 7, characterized in that they include a tetrakisphosphine of the general formula
(R¹R²P-CH₂-)₂CH-Q-CH(-CH₂-PR¹R²)₂,
wherein Q is a chemical bond or a bivalent organic bridging group comprising up to 18 carbon atoms.

9. Catalyst compositions as claimed in claim 8, characterized in that Q is a group of the general formula -(CH₂)ₙ-, wherein n is an integer ranging from 0 to 14.

10. Catalyst compositions as claimed in claim 8, characterized in that Q is a group of the general formula -O-Q¹-O-, wherein Q¹ is a bivalent hydrocarbyl bridging group comprising 2 to 18 carbon atoms.

11. Catalyst compositions as claimed in claim 10, characterized in that Q¹ is a bridging group of the formula -CH₂-Q²-CH₂- wherein Q² is a phenylene group which is optionally substituted with 1 to 4 methyl groups.

12. Catalyst compositions as claimed in any of claims 1-11, characterized in that they include a tetrakisphosphine in which R¹ and R² represent identical optionally polarly substituted aromatic hydrocarbyl groups.

13. Catalyst compositions as claimed in claim 12, characterized in that they include a tetrakisphosphine selected from 1,8-bis[bis(2-methoxyphenyl)phosphino]-2,7-bis[bis(2-methoxyphenyl)phosphinomethyl]octane, 1,5-bis[bis(2-methoxyphenyl)phosphino]-2,4-bis[bis(2-methoxyphenyl)phosphinomethyl]pentane, 1,4-bis[(1,3-bis(bis(2-methoxyphenyl)phosphino)-2-propoxy)methyl]benzene, 1,3-bis[(1,3-bis(bis(2-methoxyphenyl)phosphino)-2-propoxy)methyl]benzene and 1,3-bis[(1,3-bis(bis(2-methoxyphenyl)phosphino)-2-propoxy)methyl]-2,4,6-trimethylbenzene.

14. Process for the preparation of polymers, characterized in that a mixture of carbon monoxide with one or more olefinically unsaturated compounds is contacted with a catalyst composition as claimed in any of claims 1-13.

15. Tetrakisphosphines of the general formula
(R¹R²P-CH₂-)₂CH-Q-CH(-CH₂-PR¹R²)₂,
wherein R¹ and R² represent identical or different optionally polarly substituted hydrocarbyl groups and Q is a group of the general formula -(CH₂)ₙ-, in which n is an integer ranging from 0 to 14 or Q is a group of the general formula -O-Q¹-O-, in which Q¹ is a bivalent hydrocarbyl bridging group comprising 2 to 18 carbon atoms.

16. Tetrakisphosphines as claimed in claim 15, characterized by being selected from the group consisting of:
1,8-bis[bis(2 methoxyphenyl)phosphino]-2,7-bis[bis(2-methoxyphenyl)phosphinomethyl]octane, 1,5-bis[bis(2-methoxyphenyl)phosphino]-2,4-bis[bis(2-methoxyphenyl)phosphinomethyl]pentane, 1,4-bis[(1,3-bis(bis(2-methoxyphenyl)phosphino)-2-propoxy)methyl]benzene, 1,3-bis[(1,3-bis(bis(2-methoxyphenyl)phosphino)-2-propoxy)methyl]benzene and 1,3-bis[(1,3-bis(bis(2-methoxyphenyl)phosphino)-2-propoxy)methyl]-2,4,6-trimethylbenzene.

## Claims (Claims for the following Contracting State(s): ES)

1. Process for the preparation of catalyst compositions comprising combining a Group VIII metal with a phosphine, characterized in that the phosphine is a tetrakisphosphine of the general formula (R¹R²P)₄R⁵, wherein R¹ and R² represent identical or different optionally polarly substituted hydrocarbyl groups and R⁵ represents a tetravalent organic group which connects the four phosphorus atoms and has such a structure that there are at least two carbon atoms between every two phosphorus atoms.

2. Process as claimed in claim 1, characterized in that palladium is applied as the Group VIII metal.

3. Process as claimed in claim 1 or 2, characterized in that the Group VIII metal is applied in the form of a salt of a carboxylic acid, such as an acetate.

4. Process as claimed in any of claims 1-3, characterized in that in addition an anion of an acid with a pKa of less than 6, and, optionally, an organic oxidant is added.

5. Process as claimed in claim 4, characterized in that the anion is an anion of an acid with a pKa of less than 4.

6. Process as claimed in claim 4 or 5, characterized in that the anion of an acid with a pKa of less than 6 is added in a quantity of 1-1000 mol per mol of Group VIII metal, and, optionally, the organic oxidant is added in a quantity of 1-10000 mol per mol of Group VIII metal.

7. Process as claimed in any of claims 1-6, characterized in that the tetrakisphosphine is applied in a quantity of 0.25-25 mol per mol of Group VIII metal.

8. Process as claimed in any of claims 1 - 7, characterized in that a tetrakisphosphine is applied which is of the general formula
(R¹R²P-CH₂-)₂CH-Q-CH(-CH₂-PR¹R²)₂,
wherein Q is a chemical bond or a bivalent organic bridging group comprising up to 18 carbon atoms.

9. Process as claimed in claim 8, characterized in that Q is a group of the general formula -(CH₂)ₙ-, wherein n is an integer ranging from 0 to 14.

10. Process as claimed in claim 8, characterized in that Q is a group of the general formula -O-Q¹-O-, wherein Q¹ is a bivalent hydrocarbyl bridging group comprising 2 to 18 carbon atoms.

11. Process as claimed in claim 10, characterized in that Q¹ is a bridging group of the formula -CH₂-Q²-CH₂- wherein Q² is a phenylene group which is optionally substituted with 1 to 4 methyl groups.

12. Process as claimed in any of claims 1-11, characterized in that a tetrakisphosphine is applied in which R¹ and R² represent identical optionally polarly substituted aromatic hydrocarbyl groups.

13. Process as claimed in claim 12, characterized in that the tetrakisphosphine is selected from 1,8-bis[bis(2-methoxyphenyl)phosphino]-2,7-bis[bis(2-methoxyphenyl)phosphinomethyl]octane, 1,5-bis[bis(2-methoxyphenyl)phosphino]-2,4-bis[bis(2-methoxyphenyl)phosphinomethyl]pentane, 1,4-bis[(1,3-bis(bis(2-methoxyphenyl)phosphino)-2-propoxy)methyl]benzene, 1,3-bis[(1,3-bis(bis(2-methoxyphenyl)phosphino)-2-propoxy)methyl]benzene and 1,3-bis[(1,3-bis(bis(2-methoxyphenyl)phosphino)-2-propoxy)methyl]-2,4,6-trimethylbenzene.

14. Process for the preparation of polymers, characterized in that a mixture of carbon monoxide with one or more olefinically unsaturated compounds is contacted with a catalyst composition which is prepared by a process as claimed in any of claims 1-13.

15. Process for the preparation of tetrakisphosphines of the general formula
(R¹R²P-CH₂-)₂CH-Q-CH(-CH₂-PR¹R²)₂,
wherein R¹ and R² represent identical or different optionally polarly substituted hydrocarbyl groups and Q is a group of the general formula -(CH₂)ₙ-, in which n is an integer ranging from 0 to 14 or Q is a group of the general formula -O-Q¹-O-, in which Q¹ is a bivalent hydrocarbyl bridging group comprising 2 to 18 carbon atoms, which process comprises reacting an alkali metal dihydrocarbylphosphide with a compound of the general formula
(X-CH₂-)₂CH-Q-CH(-CH₂-X)
wherein X is a tosyl group or halogen when Q is -(CH₂)ₙ- or X is halogen when Q is -O-Q'-O-.

16. Process as claimed in claim 15, characterized in that a tetrakisphosphine is prepared which is selected from the group consisting of:
1,8-bis[bis(2-methoxyphenyl)phosphino]-2,7-bis[bis(2-methoxy phenyl)phosphinomethyl]octane, 1,5-bis[bis(2-methoxyphenyl)phosphino]-2,4-bis[bis(2-methoxyphenyl)phosphinomethyl]pentane, 1,4-bis[(1,3-bis(bis(2-methoxyphenyl)phosphino)-2-propoxy)methyl]benzene, 1,3-bis[(1,3-bis(bis(2-methoxyphenyl)phosphino)-2-propoxy)methyl]benzene and 1,3-bis[(1,3-bis(bis(2-methoxyphenyl)phosphino)-2-propoxy)-methyl]-2,4,6-trimethylbenzene.

## Patentansprüche (Patentansprüche für folgende(n) Vertragsstaat(en): AT, BE, CH, DE, DK, FR, GB, IT, LI, NL, SE)

1. Katalysatorzusammensetzungen mit einem Metall aus Gruppe VIII und einem Phosphin, dadurch gekennzeichnet, daß das Phosphin ein Tetrakisphosphin der allgemeinen Formel (R¹R²P)₄R⁵ darstellt, worin R¹ und R² gleiche oder verschiedene, gegebenenfalls polar substituierte Kohlenwasserstoffgruppen und R⁵ eine vierwertige organische Gruppe, an welche die vier Phosphoratome gebunden sind und welche eine solche Konstitution besitzt, daß sich mindestens zwei Kohlenstoffatome zwischen je zwei Phosphoratomen befinden, bedeuten.

2. Katalysatorzusammensetzungen nach Anspruch 1, dadurch gekennzeichnet, daß sie Palladium als das Metall aus Gruppe VIII enthalten.

3. Katalysatorzusammensetzungen nach Anspruch 1 oder 2, dadurch gekennzeichnet, daß das Metall aus Gruppe VIII darin in Form eines Salzes einer Carbonsäure, wie eines Acetats, eingebaut ist.

4. Katalysatorzusammensetzungen nach einem der Ansprüche 1-3, dadurch gekennzeichnet, daß sie ferner ein Anion einer Säure mit einem pKa kleiner als 6 sowie gegebenenfalls ein organisches Oxidationsmittel enthalten.

5. Katalysatorzusammensetzungen nach Anspruch 4, dadurch gekennzeichnet, daß sie ein Anion einer Säure mit einem pKa kleiner als 4 enthalten.

6. Katalysatorzusammensetzungen nach Anspruch 4 oder 5, dadurch gekennzeichnet, daß sie das Anion einer Säure mit einem pKa kleiner als 6 in einer Menge von 1-1000 Mol pro Mol Metall aus Gruppe VIII sowie gegebenenfalls das organische Oxidationsmittel in einer Menge von 1-10 000 Mol pro Mol Metall aus Gruppe VIII enthalten.

7. Katalysatorzusammensetzungen nach einem der Ansprüche 1-6, dadurch gekennzeichnet, daß sie das Tetrakisphosphin in einer Menge von 0,25-25 Mol pro Mol Metall aus Gruppe VIII enthalten.

8. Katalysatorzusammensetzungen nach einem der Ansprüche 1-7, dadurch gekennzeichnet, daß sie ein Tetrakisphosphin der allgemeinen Formel
(R¹R²P-CH₂-)₂CH-Q-CH(-CH₂-PR¹R²)₂
enthalten, worin Q eine chemische Bindung oder eine zweiwertige organische, bis zu 18 Kohlenstoffatome enthaltende Brückengruppe ist.

9. Katalysatorzusammensetzungen nach Anspruch 8, dadurch gekennzeichnet, daß Q eine Gruppe der allgemeinen Formel -(CH₂)ₙ- ist, worin n eine ganze Zahl im Bereich von 0 bis 14 darstellt.

10. Katalysatorzusammensetzungen nach Anspruch 8, dadurch gekennzeichnet, daß Q eine Gruppe der allgemeinen Formel -O-Q¹-O- ist, worin Q¹ eine zweiwertige Kohlenwasserstoffbrückengruppe mit 2 bis 18 Kohlenstoffatomen darstellt.

11. Katalysatorzusammensetzungen nach Anspruch 10, dadurch gekennzeichnet, daß Q¹ eine Brückengruppe der Formel -CH₂-Q²-CH₂- ist, worin Q² eine gegebenenfalls durch 1 bis 4 Methylgruppen substituierte Phenylengruppe darstellt.

12. Katalysatorzusammensetzungen nach einem der Ansprüche 1-11, dadurch gekennzeichnet, daß sie ein Tetrakisphosphin enthalten, worin R¹ und R² gleiche, gegebenenfalls polar substituierte aromatische Kohlenwasserstoffgruppen darstellen.

13. Katalysatorzusammensetzungen nach Anspruch 12, dadurch gekennzeichnet, daß sie ein unter 1,8-Bis-[bis-(2-methoxyphenyl)-phosphino]-2,7-bis-[bis-(2-methoxyphenyl)-phosphinomethyl]-oktan, 1,5-Bis-[bis-(2-methoxyphenyl)-phosphino]-2,4-bis-[bis-(2-methoxyphenyl)- phosphinomethyl]-pentan, 1,4-Bis-[(1,3-bis-(bis-(2-methoxyphenyl)-phosphino)-2-propoxy)-methyl]-benzol, 1,3-Bis-[(1,3-bis-(bis-(2-methoxyphenyl)-phosphino)-2-propoxy)-methyl]-benzol und 1,3-Bis-[(1,3-bis-(bis-(2-methoxyphenyl)-phosphino)-2-propoxy)-methyl]-2,4,6-trimethylbenzol ausgewähltes Tetrakisphosphin enthalten.

14. Verfahren zur Herstellung von Polymeren, dadurch gekennzeichnet, daß man ein Gemisch aus Kohlenmonoxid und einer oder mehreren olefinisch ungesättigten Verbindungen mit einer Katalysatorzusammensetzung nach einem der Ansprüche 1-13 in Berührung bringt.

15. Tetrakisphosphine der allgemeinen Formel
(R¹R²P-CH₂-)₂CH-Q-CH(-CH₂-PR¹R²)₂,
worin R¹ und R² gleiche oder verschiedene, gegebenenfalls polar substituierte Kohlenwasser-stoffgruppen und Q eine Gruppe der allgemeinen Formel -(CH₂)ₙ-, in der n eine ganze Zahl im Bereich von 0 bis 14 darstellt, oder Q eine Gruppe der allgemeinen Formel -O-Q¹-O- bedeuten, worin Q¹ für eine zweiwertige Kohlenwasserstoffbrückengruppe mit 2 bis 18 Kohlen-stoffatomen steht.

16. Tetrakisphosphine nach Anspruch 15, dadurch gekennzeichnet, daß sie aus der 1,8-Bis-[bis-(2-methoxyphenyl)-phosphino]-2,7-bis-[bis-(2-methoxyphenyl)-phosphinomethyl]-oktan, 1,5-Bis-[bis-(2-methoxyphenyl)-phosphino]-2,4-bis-[bis-(2-methoxyphenyl)-phos-phinomethyl]-pentan, 1,4-Bis-[(1,3-bis-(bis-(2-meth-oxyphenyl)-phosphino)-2-propoxy)-methyl]-benzol, 1,3-Bis-[(1,3-bis-(bis-(2-methoxyphenyl)-phosphino)-2-propoxy)-methyl]-benzol und 1,3-Bis-[(1,3-bis-(bis-(2-methoxyphenyl)-phosphino)-2-propoxy)-methyl]-2,4,6-trimethylbenzol umfassenden Gruppe ausgewählt sind.

## Patentansprüche (Patentansprüche für folgende(n) Vertragsstaat(en): ES)

1. Verfahren zur Herstellung von Katalysatorzusammensetzungen, bei dem man ein Metall aus Gruppe VIII an ein Phosphin bindet, dadurch gekennzeichnet, daß das Phosphin ein Tetrakisphosphin der allgemeinen Formel (R¹R²P)₄R⁵ darstellt, worin R¹ und R² gleiche oder verschiedene, gegebenenfalls polar substituierte Kohlenwasserstoffgruppen und R⁵ eine vierwertige organische Gruppe, an welche die vier Phosphoratome gebunden sind und welche eine solche Konstitution besitzt, daß sich mindestens zwei Kohlenstoffatome zwischen je zwei Phosphoratomen befinden, bedeuten.

2. Verfahren nach Anspruch 1, dadurch gekennzeichnet, daß Palladium als das Metall aus Gruppe VIII eingesetzt wird.

3. Verfahren nach Anspruch 1 oder 2, dadurch gekennzeichnet, daß das Metall aus Gruppe VIII in Form eines Salzes einer Carbonsäure, wie eines Acetats, eingesetzt wird.

4. Verfahren nach einem der Ansprüche 1-3, dadurch gekennzeichnet, daß ferner ein Anion einer Säure mit einem pKa kleiner als 6 sowie gegebenenfalls ein organisches Oxidationsmittel zugesetzt werden.

5. Verfahren nach Anspruch 4, dadurch gekennzeichnet, daß das Anion ein Anion einer Säure mit einem pKa kleiner als 4 ist.

6. Verfahren nach Anspruch 4 oder 5, dadurch gekennzeichnet, daß das Anion einer Säure mit einem pKa kleiner als 6 in einer Menge von 1-1000 Mol pro Mol Metall aus Gruppe VIII sowie gegebenenfalls das organische Oxidationsmittel in einer Menge von 1-10 000 Mol pro Mol Metall aus Gruppe VIII zugesetzt werden.

7. Verfahren nach einem der Ansprüche 1-6, dadurch gekennzeichnet, daß das Tetrakisphosphin in einer Menge von 0,25-25 Mol pro Mol Metall aus Gruppe VIII eingesetzt wird.

8. Verfahren nach einem der Ansprüche 1-7, dadurch gekennzeichnet, daß das eingesetzte Tetrakisphosphin der allgemeinen Formel
(R¹R²P-CH₂-)₂CH-Q-CH(-CH₂-PR¹R²)₂
entspricht, worin Q eine chemische Bindung oder eine zweiwertige organische, bis zu 18 Kohlenstoffatome enthaltende Brückengruppe ist.

9. Verfahren nach Anspruch 8, dadurch gekennzeichnet, daß Q eine Gruppe der allgemeinen Formel -(CH₂)ₙ-ist, worin n eine ganze Zahl im Bereich von 0 bis 14 darstellt.

10. Verfahren nach Anspruch 8, dadurch gekennzeichnet, daß Q eine Gruppe der allgemeinen Formel -O-Q¹-O-ist, worin Q¹ eine zweiwertige, 2 bis 18 Kohlenstoffatome enthaltende Kohlenwasserstoffbrückengruppe darstellt.

11. Verfahren nach Anspruch 10, dadurch gekennzeichnet, daß Q¹ eine Brückengruppe der Formel -H₂-Q²-CH₂- ist, worin Q² eine gegebenenfalls durch 1 bis 4 Methylgruppen substituierte Phenylengruppe darstellt.

12. Verfahren nach einem der Ansprüche 1-11, dadurch gekennzeichnet, daß man ein Tetrakisphosphin einsetzt, worin R¹ und R² gleiche, gegebenenfalls polar substituierte aromatische Kohlenwasserstoffgruppen darstellen.

13. Verfahren nach Anspruch 12, dadurch gekennzeichnet, daß das Tetrakisphosphin unter 1,8-Bis-[bis-(2-methoxyphenyl)-phosphino]-2,7-bis-[bis-(2-methoxyphenyl)-phosphinomethyl]-oktan, 1,5-Bis-[bis-(2-methoxyphenyl)-phosphino]-2,4-bis-[bis-(2-methoxyphenyl)-phosphinomethyl]-pentan, 1,4-Bis-[(1,3-bis-(bis-(2-methoxyphenyl)-phosphino)-2-propoxy)-methyl]- benzol, 1,3-Bis-[(1,3-bis-(bis-(2-methoxy-phenyl)-phosphino)-2-propoxy)-methyl]-benzol und 1,3-Bis-[(1,3-bis-(bis-(2-methoxyphenyl)-phosphino)-2-propoxy)-methyl]-2,4,6-trimethylbenzol ausgewählt ist.

14. Verfahren zur Herstellung von Polymeren, dadurch gekennzeichnet, daß man ein Gemisch aus Kohlenmonoxid und einer oder mehreren olefinisch ungesättigten Verbindungen mit einer durch ein Verfahren nach einem der Ansprüche 1-13 hergestellten Katalysatorzusammensetzung in Berührung bringt.

15. Verfahren zur Herstellung von Tetrakisphosphinen der allgemeinen Formel
(R¹R²P-CH₂-)₂CH-Q-CH(-CH₂-PR¹R²)₂,
worin R¹ und R² gleiche oder verschiedene, gegebenenfalls polar substituierte Kohlenwasserstoffgruppen und Q eine Gruppe der allgemeinen Formel -(CH₂)ₙ-, worin n eine ganze Zahl im Bereich von 0 bis 14 darstellt, oder Q eine Gruppe der allgemeinen Formel -O-Q¹-O-, worin Q¹ für eine zweiwertige, 2 bis 18 Kohlenstoffatome enthaltende Kohlenwasserstoffbrückengruppe steht, bedeuten, dadurch gekennzeichnet, daß man Alkali-dihydrocarbylphosphid mit einer Verbindung der allgemeinen Formel
(X-CH₂-)₂CH-Q-CH(-CH₂-X),
worin X im Fall von Q = -(CH₂)ₙ- eine Tosylgruppe oder Halogen oder im Fall von Q = -O-Q'-O- Halogen bedeutet, umsetzt.

16. Verfahren nach Anspruch 15, dadurch gekennzeichnet, daß man ein aus der 1,8-Bis-[bis-(2-methoxyphenyl)-phosphino]-2,7-bis-[bis-(2-methoxyphenyl)-phosphinomethyl]-oktan, 1,5-Bis-[bis-(2-methoxyphenyl)-phosphino]-2,4-bis-[bis-(2-methoxyphenyl)-phosphinomethyl)-pentan, 1,4-Bis-[(1,3-bis-(bis-(2-methoxyphenyl)-phosphino)-2-propoxy)-methyl]-benzol, 1,3-Bis-[(1,3-bis-(bis-(2-methoxyphenyl)-phosphino)-2-propoxy)-methyl]-benzol und 1,3-Bis-[(1,3-bis-(bis-(2-methoxyphenyl)-phosphino)-2-propoxy)-methyl]-2,4,6-trimethyl benzol umfassenden Gruppe ausgewähltes Tetra-kisphosphin herstellt.

## Revendications (Revendications pour l'(les) Etat(s) contractant(s) suivant(s): AT, BE, CH, DE, DK, FR, GB, IT, LI, NL, SE)

1. Compositions catalytiques comprenant un métal du groupe VIII et une phosphine caractérisées en ce que la phosphine est une tétrakisphosphine de la formule générale (R¹R²P)₄R⁵, dans laquelle R¹ et R² représentent des groupes hydrocarbyle identiques ou différents portant éventuellement des substituants polaires et R⁵ représente un groupe organique tétravalent qui relie les quatre atomes de phosphore et a une structure telle qu'il y ait au moins deux atomes de carbone entre deux atomes de phosphore quelconques.

2. Compositions catalytiques selon la revendication 1, caractérisées en ce qu'elles comprennent du palladium comme métal du groupe VIII.

3. Compositions catalytiques selon la revendication 1 ou 2, caractérisées en ce que le métal du groupe VIII y est incorporé sous la forme d'un sel d'un acide carboxylique, tel qu'un acétate.

4. Compositions catalytiques selon l'une quelconque des revendications 1-3, caractérisées en ce qu'elles comprennent en outre un anion d'un acide d'un pKa de moins de 6 et éventuellement un oxydant organique.

5. Compositions catalytiques selon la revendication 4, caractérisées en ce qu'elles comprennent un anion d'un acide d'un pKa de moins de 4.

6. Compositions catalytiques selon la revendication 4 ou 5, caractérisées en ce qu'elles comprennent l'anion d'un acide d'un pKa de moins de 6 dans une quantité de 1-1000 moles par mole de métal du groupe VIII et que, éventuellement, elles comprennent l'oxydant organique dans une quantité de 1-10000 moles par mole de métal du groupe VIII.

7. Compositions catalytiques selon l'une quelconque des revendications 1-6, caractérisées en ce qu'elles comprennent la tétrakisphosphine dans une quantité de 0,25-25 moles par mole de métal du groupe VIII.

8. Compositions catalytiques selon l'une quelconque des revendications 1-7, caractérisées en ce qu'elles comprennent une tétrakisphosphine de la formule générale
(R¹R²P-CH₂-)₂CH-Q-CH(-CH₂-PR¹R²)₂,
où Q est une liaison chimique ou un groupe organique bivalent formant pont comprenant jusqu'à 18 atomes de carbone.

9. Compositions catalytiques selon la revendication 8, caractérisées en ce que Q est un groupe de la formule générale -(CH₂)ₙ-, où n est un nombre entier compris entre 0 et 14.

10. Compositions catalytiques selon la revendication 8, caractérisées en ce que Q est un groupe de la formule générale -O-Q¹-O-, où Q¹ est un groupe hydrocarbyle bivalent formant pont comprenant de 2 à 18 atomes de carbone.

11. Compositions catalytiques selon la revendication 10, caractérisées en ce que Q¹ est un groupe formant pont de la formule -CH₂-Q²-CH₂-, où Q² est un groupe phénylène qui est éventuellement substitué par 1 à 4 groupes méthyle.

12. Compositions catalytiques selon l'une quelconque des revendications 1-11, caractérisées en ce qu'elles comprennent une tétrakisphosphine dans laquelle R¹ et R² représentent des groupes identiques d'hydrocarbures aromatiques portant éventuellement des substituants polaires.

13. Compositions catalytiques selon la revendication 12, caractérisées en ce qu'elles comprennent une tétrakisphosphine choisie parmi les composés suivants :
1,8-bis(bis(2-méthoxyphényl)phosphino)-2,7-bis(bis(2-méthoxyphényl)phosphinométhyl)octane,
1,5-bis(bis(2-méthoxyphényl)phosphino)-2,4-bis(bis(2-méthoxyphényl)phosphinométhyl)pentane,
1,4-bis((1,3-bis(bis(2-méthoxyphényl)phosphino)-2-propoxy)méthyl)benzène,
1,3-bis((1,3-bis(bis(2-méthoxyphényl)phosphino)-2-propoxy)méthyl)benzène et
1,3-bis((1,3-bis(bis(2-méthoxyphényl)phosphino)-2-propoxy)méthyl)-2,4,6-triméthylbenzène.

14. Procédé pour la préparation de polymères, caractérisé en ce qu'un mélange de monoxyde de carbone avec un ou plusieurs composés oléfiniquement insaturés est mis en contact avec une composition catalytique selon l'une quelconque des revendications 1-13.

15. Tétrakisphosphines de la formule générale
(R¹R²P-CH₂-)₂CH-Q-CH(-CH₂-PR¹R²)₂,
où R¹ et R² représentent des groupes identiques ou différents d'hydrocarbures portant éventuellement des substituants polaires et Q est un groupe de la formule générale -(CH₂)ₙ-, où n est un nombre entier compris entre 0 et 14 ou Q est un groupe de la formule générale -O-Q¹-O-, où Q¹ est un groupe hydrocarbyle bivalent formant pont comprenant de 2 à 18 atomes de carbone.

16. Tétrakisphosphines selon la revendication 15, caractérisées en ce qu'elles sont choisies dans le groupe constitué par les composés suivants :
1,8-bis(bis(2-méthoxyphényl)phosphino)-2,7-bis(bis-(2-méthoxyphényl)phosphinométhyl)octane,
1,5-bis(bis(2-méthoxyphényl)phosphino)-2,4-bis(bis-(2-méthoxyphényl)phosphinométhyl)pentane,
1,4-bis((1,3-bis(bis(2-méthoxyphényl)phosphino)-2-propoxy)méthyl)benzène,
1,3-bis((1,3-bis(bis(2-méthoxyphényl)phosphino)-2-propoxy)méthyl)benzène et
1,3-bis((1,3-bis(bis(2-méthoxyphényl)phosphino)-2-propoxy)méthyl)-2,4,6-triméthylbenzène.

## Revendications (Revendications pour l'(les) Etat(s) contractant(s) suivant(s): ES)

1. Procédé pour la préparation de compositions catalytiques comprenant la combinaison d un métal du groupe VIII avec une phosphine, caractérisé en ce que la phosphine est une tétrakisphosphine de la formule générale (R¹R²P)₄R⁵, dans laquelle R¹ et R² représentent des groupes identiques ou différents d'hydrocarbures portant éventuellement des substituants polaires et R⁵ représente un groupe organique tétravalent qui relie les quatre atomes de phosphore et a une structure telle qu'il y ait au moins deux atomes de carbone entre deux atomes de phosphore quelconques.

2. Procédé selon la revendication 1, caractérisé en ce qu'on utilise du palladium comme métal du groupe VIII.

3. Procédé selon la revendication 1 ou 2, caractérisé en ce que le métal du groupe VIII est utilisé sous la forme d'un sel d'un acide carboxylique, tel qu'un acétate.

4. Procédé selon l'une quelconque des revendications 1-3, caractérisé en ce qu'on ajoute en outre un anion d'un acide d'un pKa de moins de 6 et, éventuellement, un oxydant organique.

5. Procédé selon la revendication 4, caractérisé en ce que l'anion est un anion d un acide d'un pKa de moins de 4.

6. Procédé selon la revendication 4 ou 5, caractérisé en ce que l'anion d'un acide d'un pKa de moins de 6 est ajouté dans une quantité de 1-1000 moles par mole de métal du groupe VIII et, éventuellement, l'oxydant organique est ajouté dans une quantité de 1-10000 moles par mole de métal du groupe VIII.

7. Procédé selon l'une quelconque des revendications 1-6, caractérisé en ce qu'on utilise la tétrakisphosphine dans une quantité de 0,25-25 moles par mole de métal du groupe VIII.

8. Procédé selon l'une qualconque des revendications 1-7, caractérisé en ce qu'on utilise une tétrakisphosphine de la formule générale
(R¹R²P-CH₂-)₂CH-Q-CH(-CH₂-PR¹R²)₂,
où Q est une liaison chimique ou un groupe organique bivalent formant pont qui comprend jusqu'à 18 atomes de carbone.

9. Procédé selon la revendication 8, caractérisé en ce que Q est un groupe de la formule générale -(CH₂)ₙ, où n est un nombre entier compris entre 0 et 14.

10. Procédé selon la revendication 8, caractérisé en ce que Q est un groupe de la formule générale -O-Q¹-O-, où Q¹ est un groupe hydrocarbyle bivalent formant pont comprenant de 2 à 18 atomes de carbone.

11. Procédé selon la revendication 10, caractérisé en ce que Q¹ est un groupe formant pont de la formule -CH₂-Q²-CH₂ dans laquelle Q² est un groupe phénylène qui est éventuellement substitué par 1 à 4 groupes méthyle.

12. Procédé selon l'une quelconque des revendications 1-11, caractérisé en ce qu'on utilise une tétrakisphosphine dans laquelle R¹ et R² représentent des groupes identiques d'hydrocarbures aromatiques portant éventuellement des substituants polaires.

13. Procédé selon la revendication 12, caractérisé en ce que la tétrakisphosphine est choisie parmi les composés suivants :
1,8-bis(bis(2-méthoxyphényl)phosphino)-2,7-bis(bis(2-méthoxyphényl)phosphinométhyl)octane,
1,5-bis(bis(2-méthoxyphényl)phosphino)-2,4-bis(bis(2-méthoxyphényl)phosphinométhyl)pentane,
1,4-bis((1,3-bis(bis(2-méthoxyphényl)phosphino)-2-propoxy)méthyl)benzène,
1,3-bis((1,3-bis(bis(2-méthoxyphényl)phosphino)-2-propoxy)méthyl)benzène et
1,3-bis((1,3-bis(bis(2-méthoxyphényl)phosphino)-2-propoxy)méthyl)-2,4,6-triméthylbenzène.

14. Procédé pour la préparation de polymères, caractérisé en ce qu'un mélange de monoxyde de carbone et d'un ou plusieurs composés oléfiniquement insaturés est mis en contact avec une composition catalytique qui est préparée par un procédé selon l'une quelconque des revendications 1-13.

15. Procédé pour la préparation de tétrakisphosphines de la formule générale
(R¹R²P-CHG₂-)₂CH-Q-CH(-CH₂-PR¹R²)₂,
dans laquelle R¹ et R² représentent des groupes identiques ou différents d'hydrocarbures portant éventuellement des substituants polaires et Q est un groupe de la formule générale -(CH₂)ₙ-, dans laquelle n est un nombre entier compris entre 0 et 14 ou Q est un groupe de la formule générale -O-Q¹-O-, dans laquelle Q¹ est un groupe hydrocarbyle bivalent formant pont comprenant 2 à 18 atomes de carbone, lequel procédé comprend la réaction d'un dihydrocarbylphosphure de métal alcalin avec un composé de la formule générale
(X-CH₂-)₂CH-Q-CH(-CH₂-X)
dans laquelle X est un groupe tosyle ou un atome d'halogène quand Q est -(CH₂)ₙ- ou X est un atome d'halogène quand Q est -O-Q'-O-.

16. Procédé selon la revendication 15, caractérisé en ce qu'on prépare une tétrakisphosphine qui est choisie dans le groupe constitué par les composés suivants :
1,8-bis(bis(2-méthoxyphényl)phosphino)-2,7-bis(bis(2-méthoxyphényl)phosphinométhyl)octane,
1,5-bis(bis(2-méthoxyphényl)phosphino)-2,4-bis(bis(2-méthoxyphényl)phosphinométhyl)pentane,
1,4-bis((1,3-bis(bis(2-méthoxyphényl)phosphino)-2-propoxy)méthyl)benzène,
1,3-bis((1,3-bis(bis(2-méthoxyphényl)phosphino)-2-propoxy)méthyl)benzène et
1,3-bis((1,3-bis(bis(2-méthoxyphényl)phosphino)-2-propoxy)méthyl)-2,4,6-triméthylbenzène.
